# EUROPÄISCHE PATENTSCHRIFT

(11) **EP 0 396 909 B1**
(45) Veröffentlichungstag und Bekanntmachung des Hinweises auf die Patenterteilung: **14.07.1993**
(21) Anmeldenummer: 90106561.5
(22) Anmeldetag: 05.04.1990
(51) Int. Cl.: F16F 13/00

(54) **Hydraulisch wirkendes Dämpfungselement**
Hydraulically operating shock absorbing unit
Elément à amortissement hydraulique

(30) Priorität: 10.05.1989 DE 3915311
(43) Veröffentlichungstag der Anmeldung: 14.11.1990
(73) Patentinhaber: METZELER GIMETALL AG, D-80992 München (DE)
(72) Erfinder: Grothe, Manfred, Dr., D-8000 München 60 (DE); Härtel, Volker, Dr., D-8034 Germering (DE)
(74) Vertreter: Michelis, Theodor

(56) Entgegenhaltungen:
- EP-A- 0 219 786
- EP-A- 0 322 239
- US-A- 2 668 033
- US-A- 4 783 063
- PATENT ABSTRACTS OF JAPAN vol. 9, no. 124 (M-383)(1847) 29 Mai 1985, & JP-A-60 8539 (TOYODA GOSEI) 17 Januar 1985

## Beschreibung

Die Erfindung bezieht sich auf ein hydraulisch wirkendes Dämpfungselement, bei dem zwei starre Stirnwände durch koaxiale, elastisch nachgiebige Wandungen miteinander verbunden sind und die so gebildeten, koaxialen Kammern über einen Überströmkanal miteinander in Verbindung stehen, wobei die äußere Umfangswand aus gummielastischem Material besteht.

Ein solches Dämpfungselement, bei dem beide, relativ stark ausgebildete Wandungen aus Gummi bestehen, ist aus der US-A-2 668 033 bekannt. Ein derart ausgebildetes Lager hat jedoch eine sehr große Federsteifigkeit, so daß eine hohe Dämpfungskraft nur bei gleichzeitiger Überwindung dieser Federsteifigkeit erzielbar ist.

Demgegenüber liegt der vorliegenden Erfindung die Aufgabe zugrunde, ein Dämpfungselement zu schaffen, das zwar eine hohe Volumensteifigkeit, jedoch nur eine sehr geringe Federsteifigkeit aufweist, so daß mit einem solchen Element eine Dämpfung im wesentlichen unabhängig von der Federsteifigkeit erfolgen kann. Ein solches reines Dämpfungselement soll dabei sehr einfach herstellbar sein und allein oder parallel zu einem Federelement hoher Steifigkeit einsetzbar sein.

Zur Lösung dieser Aufgabe ist ausgehend von dem eingangs genannten Stand der Technik erfindungsgemäß vorgesehen, daß die innere Wandung aus einem elastischen, druckstabilen Faltenbalg besteht, an dessen einem Ende der sich mindestens über einen Teilumfang erstreckende Überströmkanal zur Verbindung der als Hauptkammer wirkenden Kammer innerhalb des Faltenbalges und der als Ausgleichskammer wirkenden Kammer zwischen Faltenbalg und Umfangswand angeformt ist.

Bei einem solchen Dämpfungselement ist die dämpfende Wirkung allein durch die Volumensteifigkeit, die Geometrie des Überströmkanals und die Viskosität der verwendeten Flüssigkeit gegeben und zwar unabhängig von der Federsteifigkeit, die bei einem derartigen Dämpfungselement nur sehr gering ist.

Zweckmäßigerweise wird bei einem solchen Dämpfungselement der Überströmkanal gebildet durch eine doppelwandige Ausbildung des einen Endes des Faltenbalges derart, daß angrenzend an die Stirnwand eine Rinne angenähert rechteckigen Querschnittes gebildet ist, die einen angenähert tangentialen Einlaß von der Hauptkammer und einen angenähert tangentialen Auslaß in die Ausgleichskammer aufweist.

Die beiden scheibenförmigen Stirnwände aus Metall oder Kunststoff können dabei auf ihrer kammerseitigen Fläche kreisringförmige Klemmnuten zur formschlüssigen Aufnahme der stirnseitigen Enden des Faltnbalges und auf ihrer Außenseite angeformte Krafteinleitungselemente, z.B. in Form eines Schraubbolzens oder einer Schwalbenschwanzführung, aufweisen.

Dabei ist es möglich, daß eine der aus Kunststoff bestehenden Stirnwände unmittelbar einstückig an den Faltenbalg angeformt ist.

Die gummielastische Umfangswand ist zweckmäßigerweise angenähert zylindrisch ausgebildet und umfaßt mit ihren Enden die Stirnwände, gegen die sie mittels außenliegender Klemmringe flüssigkeitsdicht verspannt ist.

Es ist aber auch möglich, ein in etwa topfförmiges Gummiformteil vorzusehen, dessen angenähert zylindrischer Bereich die Kammerumfangswand und dessen flacher Bodenbereich die an den Überströmkanal angrenzende Stirnwand bilden, in welcher ein kreisscheibenförmiges Armierungsteil aus Metall oder Kunststoff eingeformt ist und bei dem die Aufnahmenuten für das überströmkanalseitige Faltenbalgende in die Gummistirnwand eingeformt sind.

Dabei kann das Armierungsteil am Außenumfang von einem ringförmigen Ansatz des Gummiformteils umschlossen sein und auf seiner innenliegenden Fläche ringförmige Nuten zur Aufnahme der das Faltenbalgende umschließenden ringförmigen Erhebungen des Gummiformteilbodens aufweisen.

Zur Entkopplung hochfrequenter Schwingungen können in an sich bekannter Weise zusätzliche Entkopplungsglieder vorgesehen sein.

Ein solches Entkopplungsglied kann aus einer in einer der Stirnseiten der Hauptkammer eingelassenen ebenen Gummimembran bestehen, die eine dahinterliegende luftgefüllte Membrankammer gegen die Hauptkammer abgrenzt.

Es ist aber auch möglich, daß das Entkopplungsglied die Wandung des Faltenbalges radial durchsetzende, auf einer Kreislinie liegende Bohrungen aufweist, die auf ihrer Außenseite von einem elastischen Gummiband abgedeckt sind, das die Bohrungen bei Druckerhöhung ventilartig freigibt.

Diese Bohrungen können in einem zylindrisch ausgebildeten Abschnitt am stirnseitigen Ende des Faltenbalges oder aber auch in der außenliegenden Wandung des Überströmkanals eingelassen sein.

Zum Aufbringen einer evtl. erforderlichen Federsteifigkeit kann parallel zum Faltenbalg ein mechanisch wirkender Federkörper angeordnet sein. Dieser Federkörper kann als metallische Schraubenfeder ausgebildet und innerhalb des Faltenbalges zwischen den beiden Stirnwänden eingespannt sein.

Der Faltenbalg selbst besteht zweckmäßigerweise aus einem elastischen Kunststoff in Form von ungeschäumtem Polyurethan, Polyäthylen, elastischem Polyester oder weichgemachtem Polyamid. Es ist aber auch möglich, den Faltenbalg aus einer Polypropylen-EPDM-Legierung oder aber einem gummierten Gewebe herzustellen.

Anhand einer schematischen Zeichnung sind Aufbau und Funktionsweise von Ausführungsbeispielen nach der Erfindung näher erläutert. Dabei zeigen
- Fig. 1: einen Längsschnitt durch ein Dämpfungselement im prinzipiellen Aufbau
- Fig. 2: einen Querschnitt durch das Dämpfungselement entlang der Schnittlinie II-II nach Fig. 1 im Bereich des Überströmkanals
- Fig. 3: eine weitere Ausgestaltung eines solchen Dämpfungselementes und
- Fig. 4: ein Dämpfungselement mit zusätzlichen Entkopplungsgliedern und Elementen zur Erhöhung der Federsteifigkeit

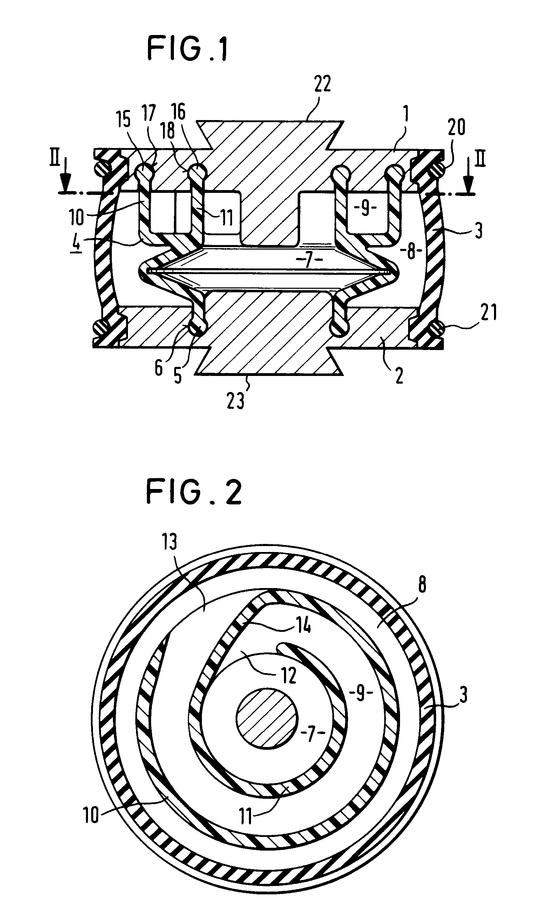

Wie man aus den Schnittzeichnungen nach Fig. 1 und 2 ersieht, weist das Dämpfungselement eine obere Stirnwand 1 und eine untere Strinwand 2 aus Metall oder Kunststoff auf, die außen von einer zylindrischen oder gewölbten weichelastischen Umfangswand 3 aus Gummi umschlossen sind. Zwischen den beiden Stirnwänden 1 und 2 ist nunmehr ein elastischer, aber druckstabiler Faltenbalg 4 eingesetzt, der hier vereinfacht mit nur einer Falte dargestellt ist, selbstverständlich aber auch je nach Ausgestaltung und erforderlichem Volumen mehrere Falten umfassen kann. Dieser Faltenbalg 4 ist aus elastischem Kunststoff, wie z.B. ungeschäumtem Polyurethan, Polyäthylen, Polyester oder weichgemachtem Polyamid, oder aus einer Polypropylen-EPDM-Legierung im Spritzgießverfahren oder Blasformverfahren oder aber aus einem gummierten Gewebe hergestellt. Am unteren Ende ist dieser Faltenbalg 4 über eine ggf. verdickte Stirnwulst 5 in eine entsprechende umlaufende Nut 6 in der unteren Stirnwand 2 klemmend eingesetzt.

Der Faltenbalg 4 umschließt die Hauptkammer 7 des Dämpfungselementes, während zwischen dem Faltenbalg 4 und der außenliegenden Umfangswand 3 eine Ausgleichskammer 8 gebildet wird. Beide Kammern 7 und 8 stehen über einen Überströmkanal 9 miteinander in Verbindung, der unmittelbar an den Faltenbalg 4 am oberen Ende angeformt ist. Dazu ist durch eine doppelwandige Gestaltung 10 und 11 praktisch eine U-förmige Rinne geschaffen, die auf der Oberseite von der Stirnwand 1 abgeschlossen ist und damit den Überströmkanal 9 bildet.

Wie man dazu aus dem Querschnitt nach Fig. 2 ersieht, weist der Kanal 9 einen zur Hauptkammer 7 freigeschnittenen Einlauf 12 und einen zur Ausgleichskammer 8 freigeschnittenen Auslauf 13 auf, wobei Einlauf 12 und Auslauf 13 strömungsgünstig gestaltet sind dadurch, daß im Bereich zwischen Auslauf und Einlauf die Außenwandung 10 wie ein Strömungsleitblech 14 nach innen geführt und in die Innenwandung 11 übergeht und dabei in einem flachen Winkel von ca. 30 - 40° zur Tangente von Außen- und Innenwandung verläuft.

Diese obere, durch die beiden Kanalwandungen 10 und 11 gebildete Stirnseite des Faltenbalges 4 ist nun in gleicher Weise über wulstförmige Verdickungen 15 und 16 in entsprechende Nuten 17 und 18 auf der innenliegenden Seite der Stirnwand 1 eingeklemmt.

Zur flüssigkeitsdichten Absicherung kann die äußere Umfangswand 3 noch über Schellen oder Spannringe 20 und 21 luft- und flüssigkeitsdicht gegen die obere Stirnwand 1 bzw. die untere Stirnwand 2 verspannt sein. Ferner können zur Befestigung des Dämpfungselementes entsprechende Krafteinleitungselemente, z.B. in Form von Schwalbenschwanzführungen 22 und 23, unmittelbar an die Stirnwände 1 und 2 angeformt sein.

Bei einem Zusammendrücken des Dämpfungselementes wird nun Flüssigkeit aus der faltenbalgartigen Hauptkammer 7 über den Überströmkanal 9 in die Ausgleichskammer 8 gepumpt, während beim Entlasten bzw. Dehnen des Elementes die Flüssigkeit wieder von der äußeren Ausgleichskammer 8 zurück in die Hauptkammer 7 im Innern des Faltenbalges 4 gepreßt wird.

Während dieses Durchströmens durch den Überströmkanal 9 erfolgt nun die gewünschte Dämpfung, die weitgehend unabhängig von der Federsteifigkeit des Dämpfungselementes ist, da diese Federsteifigkeit sehr gering ist und nur durch die relativ weiche, äußere Umfangswand 3 und die axiale Stabilität des Faltenbalges 4 bestimmt wird. Das bedeutet, daß die Dämpfung eines solchen Elementes praktisch allein bestimmt wird durch die Geometrie des Überströmkanals 9 und die Viskosität der verwendeten Flüssigkeit.

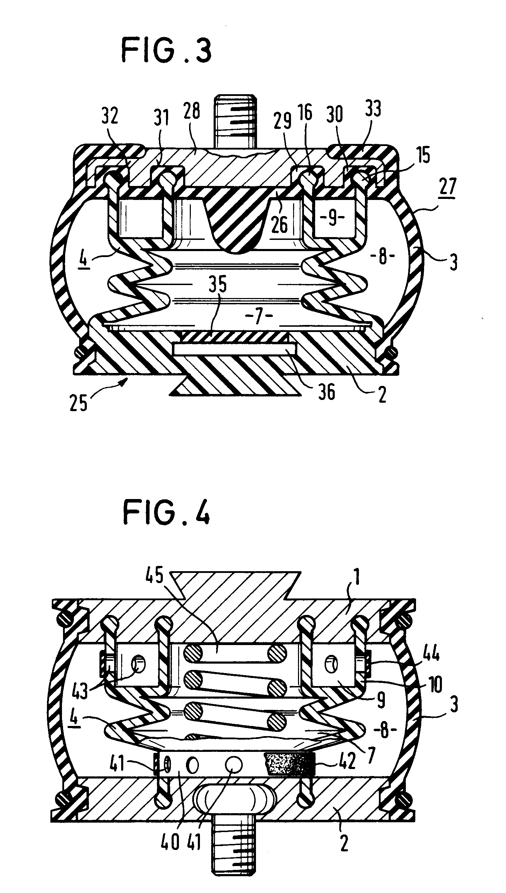

Eine weitere konstruktive Gestaltungsmöglichkeit eines solchen Dämpfungselementes ist in Fig. 3 dargestellt. Dabei sind zunächst Faltenbalg 4 und untere Stirnwand 2 als einstückiges, integrales Element 25 ausgebildet, d.h. die Stirnwand 2 ist unmittelbar an den Faltenbalg 4 angeformt. Darüber hinaus sind Umfangswand 3 und der obere innenliegende Stirnwandbereich 26, die die Begrenzung des Überströmkanals 9 bildet, als einstückiges Gummiformteil 27 ausgebildet, in das lediglich ein massives Stirnwandteil 28 aus Metall oder Kunststoff als Armierung eingeknüpft ist.

Die Stirnwand 26 des Gummiformteils 27 weist dabei ringförmige Erhebungen 29 und 30 auf, in die entsprechende Nuten zur Aufnahme der wulstförmigen Faltenbalgenden 15 und 16 eingelassen sind. Zur Aufnahme und sicheren Abstützung dieser Erhebungen 29 und 30 weist die Armierungsplatte 28 entsprechende Nuten 31 und 32 auf. Zur sicheren Halterung ist darüber hinaus der äußere Rand der Armierungsplatte 28 noch von einem ringförmigen Ansatz 33 des Gummiformteils 27 umschlossen. Zusätzlich kann noch ein in der Zeichnung nicht dargestellter äußerer Spannring vorgesehen sein.

Das in Fig. 3 dargestellte Dämpfungselement läßt sich somit sehr einfach als zweiteiliges Bauteil herstellen und zwar einmal das Kunststoffteil 25 mit der unteren Stirnwand 2 und dem Faltenbalg 4 mit dem angeformten Überströmkanal 9 sowie als zweitem Bauteil dem Gummiformteil 27 mit der Umfangswandung 3 und der oberen Stirnwandung 26, wobei dieses Gummiformteil 27 beispielsweise direkt an die in die Spritzform eingelegte Armierungsplatte 28 angespritzt und anvulkanisiert werden kann.

Selbstverständlich sind auch andere konstruktive Gestaltungs- und Kombinationsmöglichkeiten als in Fig. 1 und 3 dargestellt denkbar. So kann ein Formteil 25 nach Fig. 3 mit einer oberen Stirnplatte 1 und einer Umfangswand 3 nach Fig. 1 oder ein Formteil 27 mit Armierungsplatte 28 nach Fig. 3 mit einer Stirnwand 2 und einem Faltenbalg 4 nach Fig. 1 kombiniert werden.

Zur Entkopplung bestimmter Frequenzen kann ein derartiges Dämpfungselement noch zusätzlich mit Entkopplungsgliedern versehen werden. Dies kann entsprechend Fig. 3 mit einer stirnseitig in der Hauptkammer 7 angeordneten kreisscheibenförmigen Gummimembran 35 erfolgen, die eine dahinterliegende luftgefüllte Membrankammer 36 abschließt und bei Einleiten von Schwingungen bestimmter Frequenz und Amplitude in Resonanz gerät und damit diese Schwingungen entkoppelt.

Eine weitere Möglichkeit der Entkopplung ist bei dem Ausführungsbeispiel nach Fig. 4 dargestellt. Dabei sind in einem zylindrischen unteren Abschnitt 40 des Faltenbalges 4 radiale Bohrungen 41 vorgesehen, die auf der Außenseite von einem umlaufenden elastischen Gummiband 42 abgedeckt sind. Bei plötzlichen Druckstößen kann dann das Gummiband 42 die Bohrungen 41 wie ein Ventil freigeben, so daß entsprechende Flüssigkeit im Bypass zum eigentlichen Überströmkanal 9 ausströmen kann.

Für eine entsprechende Wirkung können aber auch Bohrungen 43 in der Außenwandung 10 des Überströmkanals 9 angeordnet und von einem entsprechenden Gummiband 44 verschlossen sein.

Wie bereits erwähnt, weist ein entsprechendes Dämpfungselement nur eine sehr geringe Federsteifigkeit und damit eine von der Federsteifigkeit praktisch unabhängige Dämpfung auf. Es ist dabei möglich, ein solches Dämpfungselement allein zur Schwingungsdämpfung oder parallel zu Elementen hoher Federsteifigkeit einzusetzen. Ggf. kann einem solchen Dämpfungselement aber auch eine hohe Federsteifigkeit direkt integriert werden, und zwar wie das in Fig. 4 dargestellt ist, beispielsweise durch Anordnung einer zylindrischen Schraubenfeder 45 innerhalb der Hauptkammer 7 zwischen oberer Stirnwand 1 und unterer Stirnwand 2. Damit läßt sich auf einfache Weise eine erforderliche Anfangssteifigkeit des Dämpfungselementes aufbauen.

Insgesamt ergibt sich also ein Dämpfungselement, das einfach herzustellen ist, besonders klein baut und trotz hoher Volumensteifigkeit eine sehr geringe Federsteifigkeit aufweist, so daß die dämpfende Wirkung allein durch Volumensteifigkeit, Geometrie des Überströmkanals und Viskosität der verwendeten Flüssigkeit gegeben ist.

## Patentansprüche

1. Hydraulisch wirkendes Dämpfungselement, bei dem zwei starre Stirnwände (22, 23) durch zwei koaxiale, elastisch nachgiebige Wandungen (3, 4) miteinander verbunden sind und die so gebildeten, koaxialen Kammern (7, 8) über einen Überströmkanal (9) miteinander in Verbindung stehen, wobei die äußere Umfangswand (3) aus gummielastischem Material besteht, dadurch gekennzeichnet, daß die innere Wandung (4) aus einem elastischen, druckstabilen Faltenbalg (4) besteht, an dessen einem Ende der sich mindestens über einen Teilumfang erstrekkende Überströmkanal (9) zur Verbindung der als Hauptkammer (7) wirkenden Kammer innerhalb des Faltenbalges (4) und der als Ausgleichskammer (8) wirkenden Kammer zwischen Faltenbalg (4) und Umfangswand (3) angeformt ist.

2. Dämpfungselement nach Anspruch 1, dadurch gekennzeichnet, daß der Überströmkanal (9) gebildet ist durch eine doppelwandige Ausbildung (10, 11) des einen Endes des Faltenbalges (4) derart, daß angrenzend an die Stirnwand (1) eine Rinne angenähert rechteckigen Querschnitts gebildet ist, die einen angenähert tangentialen Einlaß (12) von der Hauptkammer (7) und einen angenähert tangentialen Auslaß (13) in die Ausgleichskammer (8) aufweist.

3. Dämpfungselement nach Anspruch 1 oder 2, dadurch gekennzeichnet, daß die beiden scheibenförmigen Stirnwände (1, 2) aus Metall oder Kunststoff auf ihrer kammerseitigen Fläche kreisringförmige Klemmnuten (6; 17, 18) zur formschlüssigen Aufnahme der stirnseitigen Enden (5; 15, 16) des Faltenbalges (4) und auf ihrer Außenseite angeformte Krafteinleitungselemente (22, 23) aufweisen.

4. Dämpfungselement nach Anspruch 3, dadurch gekennzeichnet, daß eine der aus Kunststoff bestehenden Stirnwände (2) unmittelbar einstückig an den Faltenbalg (4) angeformt ist.

5. Dämpfungselement nach Anspruch 1 und 3 oder 4, dadurch gekennzeichnet, daß die gummielastische Umfangswand (3) angenähert zylindrisch ausgebildet ist, mit ihren Enden die Stirnwände (1, 2) umfaßt und gegen diese mittels außenliegender Klemmringe (20, 21) flüssigkeitsdicht verspannt ist.

6. Dämpfungselement nach Anspruch 1 und 3 oder 4, gekennzeichnet durch ein angenähert topfförmiges Gummiformteil (27), dessen angenähert zylindrischer Bereich die Kammerumfangswand (3) und dessen flacher Bodenbereich die an den Überströmkanal (9) angrenzende Stirnwand (26) bilden, in welche ein kreisscheibenförmiges Armierungsteil (28) aus Metall oder Kunststoff eingeformt ist, und bei dem die Aufnahmenuten für das überströmkanalseitige Faltenbalgende (15, 16) in die Gummistirnwand (26) eingeformt sind.

7. Dämpfungselement nach Anspruch 6, dadurch gekennzeichnet, daß das Armierungsteil (26) am Außenumfang von einem ringförmigen Ansatz (33) des Gummiformteils (27) umschlossen ist und auf seiner innenliegenden Fläche ringförmige Nuten (31, 32) zur Aufnahme der das Faltenbalgende (15, 16) umschließenden ringförmigen Erhebungen (29, 30) des Gummiformteilbodens (26) aufweist.

8. Dämpfungselement nach einem oder mehreren der Ansprüche 1 bis 7, dadurch gekennzeichnet, daß zusätzliche Entkopplungsglieder (35; 41, 42; 43, 44) für Schwingungen vorgegebener Frequenzen vorgesehen sind.

9. Dämpfungselement nach Anspruch 8, dadurch gekennzeichnet, daß das Entkopplungsglied aus einer in einer der Stirnseiten (2) der Hauptkammer (7) eingelassenen ebenen Gummimembran (35) besteht, die eine dahinterliegende luftgefüllte Membrankammer (36) gegen die Hauptkammer (7) abgrenzt.

10. Dämpfungselement nach Anspruch 8, dadurch gekennzeichnet, daß das Entkopplungsglied die Wandung des Faltenbalges (4) radial durchsetzende, auf einer Kreislinie liegende Bohrungen (41; 43) aufweist, die auf ihrer Außenseite von einem elastischen Gummiband (42; 44) abgedeckt sind, das die Bohrungen (41; 43) bei Druckerhöhung ventilartig freigibt.

11. Dämpfungselement nach Anspruch 10, dadurch gekennzeichnet, daß die Bohrungen (41) in einem zylindrisch ausgebildeten Abschnitt (40) am stirnseitigen Ende des Faltenbalges (4) eingelassen sind.

12. Dämpfungselement nach Anspruch 10, dadurch gekennzeichnet, daß die Bohrungen (43) in die außenliegende Wandung (10) des Überströmkanals (9) eingelassen sind.

13. Dämpfungselement nach einem oder mehreren der Ansprüche 1 bis 12, dadurch gekennzeichnet, daß parallel zum Faltenbalg (4) ein mechanisch wirkender Federkörper (45) angeordnet ist.

14. Dämpfungselement nach Anspruch 13, dadurch gekennzeichnet, daß der Federkörper als metallische Schraubenfeder (45) ausgebildet ist.

15. Dämpfungselement nach Anspruch 13 oder 14, dadurch gekennzeichnet, daß der Federkörper (45) innerhalb des Faltenbalges (4) zwischen den beiden Stirnwänden (1, 2) eingespannt ist.

16. Dämpfungselement nach Anspruch 1 oder 2, dadurch gekennzeichnet, daß der Faltenbalg (4) aus einem elastischen Kunststoff in Form von ungeschäumtem Polyurethan, Polyäthylen oder weichgemachtem Polyamid besteht.

17. Dämpfungselement nach Anspruch 1 oder 2, dadurch gekennzeichnet, daß der Faltenbalg (4) aus einer Polypropylen-EPDM-Legierung besteht.

18. Dämpfungselement nach Anspruch 1 oder 2, dadurch gekennzeichnet, daß der Faltenbalg (4) aus einem gummierten Gewebe besteht.

## Claims

1. Hydraulically operating damping element, in which two rigid end walls (22, 23) are connected together by two coaxial, elastically flexible walls (3, 4) and the coaxial chambers (7, 8) which are thus formed are connected together by a transfer passage (9), the outer circumferential wall (3) consisting of an elastomeric material, characterised in that the inner wall (4) consists of an elastic, pressure- stable bellows (4), onto one end of which the transfer passage (9), which extends at least over part of the circumference, is formed to connect the chamber acting as main chamber (7) inside the bellows (4) and the chamber acting as equalizing chamber (8) between the bellows (4) and the circumferential wall (3).

2. Damping element according to claim 1, characterised in that the transfer passage (9) is formed by a double-walled construction (10, 11) of one end of the bellows (4) such that a channel of an approximately rectangular cross section is formed adjacent to the end wall (1), which channel comprises an approximately tangential inlet (12) from the main chamber (7) and an approximately tangential outlet (13) into the equalizing chamber (8).

3. Damping element according to claim 1 or 2, characterised in that the two disc-shaped end walls (1, 2) of metal or plastic comprise circular ring-shaped clamping grooves (6; 17, 18) in their surface on the chamber side for positively holding the front ends (5; 15, 16) of the bellows (4) and formed-on force introduction elements (22, 23) on their outside.

4. Damping element according to claim 3, characterised in that one of the plastic end walls (2) is formed directly onto the bellows (4) in one piece.

5. Damping element according to claim 1 and claim 3 or 4, characterised in that the elastomeric circumferential wall (3) is approximately cylindrical, embraces with its ends the end walls (1, 2) and is secured against these so as to be fluid-tight by means of external clamping rings (20, 21).

6. Damping element according to claim 1 and claim 3 or 4, characterised by an approximately pot-shaped moulded rubber part (27) whose approximately cylindrical area forms the circumferential chamber wall (3) and whose flat base area forms the end wall (26) which is adjacent to the transfer passage (9) and into which a circular disc-shaped reinforcement part (28) of metal or plastic is moulded, with the holding grooves for the bellows end (15, 16) on the transfer passage side being moulded into the rubber end wall (26).

7. Damping element according to claim 6, characterised in that the reinforcement part (28) is surrounded at the outer circumference by an annular collar (33) of the moulded rubber part (27) and comprises annular grooves (31, 32) in its internal surface for holding the annular elevations (29, 30) of the moulded rubber part base (26) which surround the bellows end (15, 16).

8. Damping element according to one or more of claims 1 to 7, characterised in that additional decoupling members (35; 41, 42; 43, 44) are provided for oscillations of given frequencies.

9. Damping element according to claim 8, characterised in that the decoupling member consists of a plane rubber diaphragm (35) which is embedded in one of the front ends (2) of the main chamber (7) and which separates an air- filled diaphragm chamber (36) disposed behind from the main chamber (7).

10. Damping element according to claim 8, characterised in that the decoupling member comprises holes (41; 43) which pass radially through the wall of the bellows (4), lie on a circular line and are covered on their outside by an elastic rubber band (42; 44) which uncovers the holes (41; 43) in the manner of a valve when there is a pressure increase.

11. Damping element according to claim 10, characterised in that the holes (41) are made in a cylindrical section (40) at the front end of the bellows (4).

12. Damping element according to claim 10, characterised in that the holes (43) are made in the external wall (10) of the transfer passage (9).

13. Damping element according to one or more of claims 1 to 12, characterised in that a mechanically operating spring element (45) is arranged parallel to the bellows (4).

14. Damping element according to claim 13, characterised in that the spring element is formed as a metallic helical spring (45).

15. Damping element according to claim 13 or 14, characterised in that the spring element (45) is gripped between the two end walls (1, 2) inside the bellows (4).

16. Damping element according to claim 1 or 2, characterised in that the bellows (4) consists of an elastic plastic in the form of non-expanded polyurethane, polyethylene or plasticized polyamide.

17. Damping element according to claim 1 or 2, characterised in that the bellows (4) consists of a polypropylene-EPDM alloy.

18. Damping element according to claim 1 or 2, characterised in that the bellows (4) consists of a rubber-coated fabric.

## Revendications

1. Elément d'amortissement hydraulique, dans lequel deux joues (22, 23) frontales rigides sont reliées l'une à l'autre par deux parois (3, 4) coaxiales et cédant élastiquement et les chambres (7, 8) coaxiales ainsi formées communiquent entre elles par un canal (9) de passage, la paroi (3) périphérique extérieure étant en un matériau ayant l'élasticité du caoutchouc, caractérisé en ce que la paroi (4) intérieure est constituée d'un soufflet à plis (4) élastique, stable à la pression et à l'une des extrémités duquel est formé le canal (9) de passage, qui s'étend sur au moins une partie de la périphérie et qui est destiné à mettre la chambre à l'intérieur du soufflet à plis (4) servant de chambre (7) principale en communication avec la chambre comprise entre le soufflet à plis (4) et la paroi (3) périphérique servant de chambre (8) de compensation.

2. Elément d'amortissement suivant la revendication 1, caractérisé en ce que le canal (9) de passage est formé par un agencement (10, 11) à double paroi de l'une des extrémités du soufflet à plis (4), de manière à former, à proximité de la joue frontale (1), une goulotte de section transversale sensiblement rectangulaire et comportant une entrée (12) sensiblement tangentielle depuis la chambre (7) principale et une sortie (13) sensiblement tangentielle dans la chambre (8) de compensation.

3. Elément d'amortissement suivant la revendication 1 ou 2, caractérisé en ce que les deux joues (1, 2) frontales en forme de disque en métal ou en matière plastique comportent, sur leurs faces tournées vers les chambres, des gorges de blocage (6 ; 17, 18) circulaires de réception avec complémentarité de formes des extrémités (5 ; 15, 16) frontales du soufflet à plis (4) et, sur leurs, côtés extérieurs, des éléments (22, 23) d'une pièce avec elles d'application d'une force.

4. Elément d'amortissement suivant la revendication 3, caractérisé en ce que l'une des joues (2) frontales en matière plastique est issue directement d'une seule pièce du soufflet à plis (4).

5. Elément d'amortissement suivant la revendication 1 et 3 ou 4, caractérisé en ce que la paroi (3) périphérique ayant l'élasticité du caoutchouc est sensiblement cylindrique, entoure par ses extrémités les joues (1, 2) frontales et est bloquée sur celles-ci d'une manière étanche au liquide au moyen d'anneaux (20, 21) de serrage extérieurs.

6. Elément d'amortissement suivant la revendication 1 et 3 ou 4, caractérisé par une pièce moulée (27) en caoutchouc sensiblement en forme de godet, dont la partie sensiblement cylindrique forme la paroi (3) périphérique de la chambre et dont le fond forme la joue (26) frontale adjacente au canal (9) de passage, joue dans laquelle est incorporée une armature (28) en forme de disque circulaire en métal ou en matière plastique, les gorges de réception des extrémités (15, 16) du soufflet à plis, du côté du canal de passage, étant ménagées dans la joue (26) frontale en caoutchouc.

7. Elément d'amortissement suivant la revendication 6, caractérisé en ce que l'armature (26) est entourée, sur la périphérie extérieure, d'un rebord (33) annulaire de la pièce moulée (27) en caoutchouc et comporte, sur sa face intérieure, des gorges (31, 32) annulaires de réception de saillies (29, 30) annulaires du fond (26) en caoutchouc qui entourent l'extrémité (15, 16) du soufflet à plis.

8. Elément d'amortissement suivant l'une ou plusieurs des revendications 1 à 7, caractérisé en ce qu'il est prévu des organes de découplage (35 ; 41, 42 ; 43, 44) supplémentaires pour des oscillations de fréquences prescrites.

9. Elément d'amortissement suivant la revendication 8, caractérisé en ce que l'organe de découplage est constitué d'une membrane (35) en caoutchouc plane encastrée dans l'un des côtés (2) frontaux de la chambre (7) principale et délimitant, par rapport à la chambre (7) principale, une chambre (36) emplie d'air et délimitée derrière la membrane.

10. Elément d'amortissement suivant la revendication 8, caractérisé en ce que l'organe de découplage comporte des trous (41 ; 43) qui traversent radialement la paroi du soufflet à plis (4) qui sont disposés sur un cercle et qui sont recouverts, du côté extérieur, d'une bande (42, 44) élastique en caoutchouc, laquelle dégage les trous (41, 43) à la manière d'une soupape, lors d'une surpression.

11. Elément d'amortissement suivant la revendication 10, caractérisé en ce que les trous (41) sont ménagés dans une partie (40) cylindrique à l'extrémité frontale du soufflet à plis (4).

12. Elément d'amortissement suivant la revendication 10, caractérisé en ce que les trous (43) sont ménagés dans la paroi (10) extérieure du canal (9) de passage.

13. Elément d'amortissement suivant l'une ou plusieurs des revendications 1 à 12, caractérisé en ce que, parallèlement au soufflet à plis (4), est montée une pièce élastique (45) à effet mécanique.

14. Elément d'amortissement suivant la revendication 13, caractérisé en ce que la pièce élastique est constituée en ressort hélicoïdal (45) métallique.

15. Elément d'amortissement suivant la revendication 13 ou 14, caractérisé en ce que la pièce (45) élastique est bloquée dans le soufflet à plis (4), entre les deux joues (1, 2) frontales.

16. Elément d'amortissement suivant la revendication 1 ou 2, caractérisé en ce que le soufflet à plis (4) est en matière plastique élastique, sous la forme de polyuréthanne non moussé, de polyéthylène ou de polyamide plastifié.

17. Elément d'amortissement suivant la revendication 1 ou 2, caractérisé en ce que le soufflet à plis (4) est en un mélange de polypropylène et d'EPDM.

18. Elément d'amortissement suivant la revendication 1 ou 2, caractérisé en ce que le soufflet à plis (4) est en tissu caoutchouté.
